(19) Europäisches Patentamt
European Patent Office
Office européen des brevets

(11) EP 4 194 298 A1

# (12) EUROPEAN PATENT APPLICATION

published in accordance with Art. 153(4) EPC

(43) Date of publication:
**14.06.2023 Bulletin 2023/24**

(21) Application number: **21854461.7**

(22) Date of filing: **20.07.2021**

(51) International Patent Classification (IPC):
***B60W 30/10*** *(2006.01)* ***B60W 40/114*** *(2012.01)*
***B62D 6/00*** *(2006.01)* ***B62D 101/00*** *(2006.01)*

(52) Cooperative Patent Classification (CPC):
**B60W 30/10; B60W 40/114; B62D 6/00**

(86) International application number:
**PCT/JP2021/027185**

(87) International publication number:
**WO 2022/030250 (10.02.2022 Gazette 2022/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.08.2020 JP 2020133052**

(71) Applicant: **Hitachi Astemo, Ltd.**
**Ibaraki 312-8503 (JP)**

(72) Inventors:
- **UEMURA, Koichi**
**Hitachinaka-shi, Ibaraki 312-8503 (JP)**
- **TAKAHAMA, Taku**
**Hitachinaka-shi, Ibaraki 312-8503 (JP)**

(74) Representative: **Hoefer & Partner Patentanwälte mbB**
**Pilgersheimer Straße 20**
**81543 München (DE)**

## (54) VEHICLE CONTROL DEVICE, VEHICLE CONTROL METHOD, AND VEHICLE CONTROL SYSTEM

(57) A vehicle control device, a vehicle control method, and a vehicle control system according to the present invention obtains, when a vehicle traveling under a lane keeping control is to change lanes, based on a stored physical quantity related to a lateral position of the vehicle relative to a lane marker and a stored physical quantity related to a yaw angle of the vehicle relative to the lane marker, a physical quantity related to a target trajectory to allow the vehicle to cross a boundary toward a destination lane of the lane change to travel while keeping a predetermined position in a width direction of the destination lane of the lane change, and outputs, based on the physical quantity related to the target trajectory, a control command related to a steering to allow the vehicle to change lanes.

FIG.3

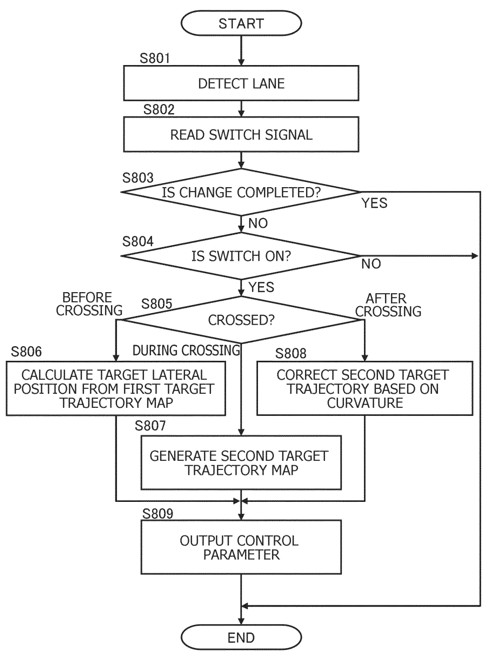


EP 4 194 298 A1

## Description

TECHNICAL FIELD

The present invention relates to a vehicle control device, a vehicle control method, and a vehicle control system.

BACKGROUND ART

A vehicle control system described in Patent Document 1 includes a detection unit which detects the position of a lane marker on a road surface in the traveling direction of a vehicle, a storage unit which stores the position of the lane marker detected by the detection unit in a predetermined range in the traveling direction, and a lane change control unit which controls lane change of the vehicle on the basis of the position of the lane marker detected by the detection unit, in which the lane change control unit determines whether lane change is possible on the basis of the position of the lane marker in the predetermined range stored in the storage unit in a case in which the lane marker is not detected by the detection unit and controls lane change of the vehicle on the basis of the position of the lane marker in the predetermined range in a case in which it is determined that lane change is possible.

REFERENCE DOCUMENT LIST

PATENT DOCUMENT

Patent Document 1: JP 2019-043378 A

SUMMARY OF THE INVENTION

PROBLEM TO BE SOLVED BY THE INVENTION

In a vehicle control system in which a lane change of a vehicle is controlled based on the detection result of a position of a lane marker, when the position of the lane marker becomes undetectable during the lane change, the lane change may not be performed precisely depending on conditions, such as the position of the vehicle relative to the lane marker and the presence or absence of a preceding vehicle and its traveling state in front of the vehicle.

The present invention has been made in view of the conventional circumstances, and an object of the present invention is to provide a vehicle control device, a vehicle control method, and a vehicle control system capable of improving an accuracy of the lane change.

MEANS FOR SOLVING THE PROBLEM

An aspect of the present invention includes obtaining, when a vehicle traveling under a lane keeping control is to change lanes, a stored physical quantity related to a lateral position of the vehicle relative to a lane marker and a stored physical quantity related to a yaw angle of the vehicle relative to the lane marker; obtaining, based on the physical quantity related to the lateral position and the physical quantity related to the yaw angle, a physical quantity related to a target trajectory to allow the vehicle to cross a boundary toward a destination lane of the lane change and to travel while maintaining a predetermined position in a width direction of a destination lane of the lane change; and outputting, based on the physical quantity related to the target trajectory, a control command related to a steering to allow the vehicle to change lanes.

EFFECTS OF THE INVENTION

The present invention makes it possible to improve the accuracy of the lane change.

BRIEF DESCRIPTION OF THE DRAWINGS

FIG. 1 is a block diagram illustrating a vehicle control system.
FIG. 2 is a timing chart illustrating an outline of a lane change assist function.
FIG. 3 is a flowchart illustrating a process of a lane change control.
FIG. 4 is a diagram for describing a process of generating a target trajectory in a lane change control.
FIG. 5 is a graph a showing a correlation between a lateral position of a vehicle and a target change amount of the lateral position.
FIG. 6 is a diagram exemplifying a first target trajectory and a traveling route of a vehicle.
FIG. 7 is a graph showing a correlation between a lateral position of a vehicle and a target change amount of a yaw angle.
FIG. 8 is a diagram for describing a basic map of a second target trajectory.
FIG. 9 is a diagram for describing a correction of a second target trajectory corresponding to a curvature.
FIG. 10 is a flowchart illustrating a process of a lane change control.

MODE FOR CARRYING OUT THE INVENTION

A vehicle control device, a vehicle control method, and a vehicle control system according to an embodiment of the present invention will be described below with reference to the drawings.

FIG. 1 is a block diagram illustrating an aspect of a vehicle control system 200 mounted on a vehicle 100, such as a four-wheel vehicle.

Vehicle control system 200 is a system that realizes a driving support of vehicle 100 (in other words, the own vehicle) by a steering control, and a driving support function includes a lane keeping assist function and a lane change assist function.

The lane keeping assist function refers to a function to automatically control steering based on a lane marker recognition result to keep vehicle 100 centered in the lane while traveling. When no lane marker is recognized and when there is a preceding vehicle, the steering is automatically controlled so that vehicle 100 follows the preceding vehicle.

Here, a lane marker refers to a road marking on a road surface for dividing lanes designated to allow vehicles to travel on them, and is, for example, a white line painted on the road surface.

Also, the lane change assist function refers to a function that starts operating in response to an operation start command from a driver of vehicle 100 and performs the steering control to direct vehicle 100, which is traveling on a road consisting of two or more lanes on each side, toward a destination lane of the lane change from an original lane before the lane change.

Here, the original lane before the lane change refers to a lane in which vehicle 100 was traveling before changing lanes, in other words, a lane in which vehicle 100 was traveling when the operation start command for starting the lane change control was given by the driver.

Also, the destination lane of the lane change is a lane adjacent to the original lane before the lane change. It is an adjacent left lane of the original lane before the lane change when a leftward lane change is requested by the driver of vehicle 100, and is an adjacent right lane of the original lane before the lane change when a rightward lane change is requested by the driver of vehicle 100.

The original lane before the lane change and the destination lane of the lane change are divided by the lane marker that serves as a lane boundary.

FIG. 2 is a timing chart schematically illustrating a process flow from the start to the end of an operation of the lane change assist function.

Time t0 of FIG. 2 indicates a state in which vehicle 100 is traveling on a road, such as an expressway or a highway, in which two or more vehicles can pass in parallel, and the lane keeping assist function is being performed (in other words, a lane keeping control state).

At time t1 when the lane keeping assist function is being performed, once the driver of vehicle 100 operates a blinker lever, vehicle system 200 receives an operation signal of the blinker lever as a command for starting operation of the lane change assist function (in other words, a lane change control) and activates the lane change assist function.

That is, due to the operation of the blinker lever by the driver of vehicle 100, an input related to the start of the lane change is made to vehicle control system 200.

When the lane change assist function is activated, vehicle control system 200 performs, at time t2, an execution determination of the lane change, such as determining whether there is a space where the lane change is possible, based on external environment information of vehicle 100.

When the lane change is possible, vehicle control system 200 generates, based on the recognition result of the lane marker, a physical quantity related to a target trajectory for the lane change and performs the auto-steering control to run vehicle 100 along the target trajectory.

Specifically, the target trajectory for the lane change is a traveling path along which vehicle 100 crosses the boundary toward the destination lane of the lane change and travels while keeping a predetermined position in the width direction of the destination lane of the lane change.

When the lane change into the destination lane of the lane change is completed at time t3, vehicle control system 200 terminates the lane change assist function and returns to the lane keeping assist function active state (in other words, a lane keeping control).

Hereinafter, vehicle control system 200 will be described in detail.

Vehicle control system 200 includes components, such as a sensor unit 300, a turn signal switch 400 serving as an operation switch of the lane change assist function, a driving support control unit 500, a steering control unit 600, and an electric power steering device 700.

Sensor unit 300 includes various onboard sensors, such as a camera 310, a yaw rate sensor 320, a vehicle speed sensor 330, a steering angle sensor 340, and an acceleration sensor 350.

Camera 310 is an imaging device for capturing images ahead of vehicle 100, and based on the image captured by camera 310, vehicle control system 200 recognizes external environment information of vehicle 100, such as information on lane markers, preceding vehicles, and obstacles.

Yaw rate sensor 320 detects a physical quantity related to a yaw rate, which is an angular velocity of vehicle 100 at which it turns leftward or rightward.

Vehicle speed sensor 330 detects a physical quantity related to a speed of vehicle 100.

Here, the system may alternately be provided with a sensor for detecting a wheel speed to estimate the speed of vehicle 100 based on the wheel speed.

Steering angle sensor 340 detects a physical quantity related to a steering angle of electric power steering device 700.

Acceleration sensor 350 detects physical quantities each related to a lateral acceleration or a longitudinal acceleration of vehicle 100.

Turn signal switch 400 is switched ON and OFF according to an operation of a blinker lever 410 (in other words, a turn signal lever) by the driver and turns on a direction indicator of vehicle 100.

Here, vehicle control system 200 activates the lane change assist function when the driver of vehicle 100 operates blinker lever 410, thereby turning turn signal switch 400 on while the lane keeping assist function is being performed.

That is, vehicle control system 200 uses turn signal switch 400 as an operation switch for operating the lane change assist function, in other words, a switch for the driver of vehicle 100 to request an activation of the lane change assist function.

Driving support control unit 500 is a vehicle control device which obtains signals, such as various detection signals output from sensor unit 300 and ON/OFF signals of turn signal switch 400, and outputs a control command related to steering, to steering control unit 600.

Driving support control unit 500 is provided with a microcomputer 510 serving as a control unit that performs a calculation based on various information obtained and outputs a calculation result.

Microcomputer 510 implements, as software, functions of a lane marker recognition unit 511, a storage processing unit 512, a position correcting unit 513, a target trajectory calculation unit 514, a control parameter A calculation unit 515, a control parameter B calculation unit 516, and a control parameter C calculation unit 517.

Lane marker recognition unit 511 recognizes, based on the image captured by camera 310, the lane marker on the road surface ahead of vehicle 100.

Also, based on the lane marker recognition result, lane marker recognition unit 511 also determines physical quantities, such as a physical quantity related to a lane width, a physical quantity related to a yaw angle of vehicle 100 relative to the lane marker, a physical quantity related to a lateral position of vehicle 100 relative to the lane marker, and a physical quantity related to a curvature of the road.

Storage processing unit 512 writes and stores, as lane marker recognition information, the physical quantities determined by lane marker recognition unit 511, each related to the lane width, the yaw angle, the lateral position, or the curvature, in a memory such as a RAM (Random Access Memory) provided in the driving support control unit 500.

Position correcting unit 513 complements the information on the yaw angle and the lateral position, which are information on a relative position of vehicle 100 with respect to the lane marker, by a dead reckoning based on detected signals of sensors, such as yaw rate sensor 320 and vehicle speed sensor 330, i.e., vehicle behavior measurement information.

Target trajectory calculation unit 514 obtains a physical quantity related to a target trajectory of vehicle 100 in the lane change assist function (hereinafter, merely referred to as "target trajectory") based on the physical quantities determined by lane marker recognition unit 511, each related to the lane width, the yaw angle, the lateral position, or the curvature, i.e., the lane marker recognition result.

Control parameter A calculation unit 515 calculates a control parameter A, which is used by steering control unit 600 for controlling the steering and is related to the curvature of the road.

Control parameter B calculation unit 516 calculates a control parameter B, which is used by steering control unit 600 for controlling the steering and is related to the yaw angle of vehicle 100.

Control parameter C calculation unit 517 calculates a control parameter C, which is used by steering control unit 600 for controlling the steering and is related to the lateral position of vehicle 100.

Based on signals of control parameters A, B, and C, etc., obtained from driving support control unit 500, steering control unit 600 calculates a physical quantity related to a target steering angle and outputs the calculated physical quantity related to the target steering angle to electric power steering device 700.

Electric power steering device 700 is a steering device in which an electric motor 710 serving as a steering actuator generates a steering force, and it is provided with a steering controller 720 for driving and controlling electric motor 710 and a steering wheel 730 operated by the driver of vehicle 100.

Steering controller 720 drives and controls electric motor 710 in accordance with the physical quantity related to the target steering angle obtained from steering control unit 600.

Here, driving support control unit 500 comprises a means capable of preventing deterioration in the accuracy of the lane change, even when no lane marker is detected during the lane change control (in other words, after the lane change control is engaged).

Specifically, when vehicle 100 traveling under the lane keeping control changes lanes, driving support control unit 500 reads out the physical quantity related to the lateral position relative to the lane marker and the physical quantity related to the yaw angle relative to the lane marker, which have been stored in the memory, i.e., stored values of the physical quantity related to the lateral position and the physical quantity related to the yaw angle.

Driving support control unit 500 also comprises a means of generating the target trajectory based on the physical quantity related to the lateral position and the physical quantity related to the yaw angle read out from the memory, and of outputting the control command related to the steering to allow vehicle 100 to change lanes based on the generated target trajectory.

Moreover, in a generating process of the target trajectory, driving support control unit 500 determines, based on the physical quantity related to the lateral position, a first target trajectory for vehicle 100 before having started crossing the boundary toward the destination lane of the lane change, and determines, based on the physical quantity related to the lateral position and the physical quantity related to the yaw angle, a second target trajectory for vehicle 100 while crossing or after having crossed the boundary toward the destination lane of the lane change to travel while keeping a predetermined position in the width direction of the destination lane of the lane change. Driving support control unit 500 then obtains a target trajectory in the lane change control based on the first target trajectory and the second target trajectory.

Here, driving support control unit 500 uses, as the first target trajectory, a trajectory of a target lateral position or a target yaw angle relative to the lateral position of vehicle 100, and uses, as the second target trajectory, a trajectory of the target lateral position relative to the longitudinal position of vehicle 100.

When vehicle control system 200 directs vehicle 100 to the adjacent lane following the trajectory of the target lateral position relative to the longitudinal position of vehicle 100, due to disturbances due to, for example, transverse gradients of the road surface and side winds, which may change a lateral movement amount of vehicle 100, only the longitudinal position of vehicle 100 moves ahead while the lateral position of vehicle 100 remains unchanged, in other words, while no progress is made in the lane change, and thus, the lane change may not be performed successfully.

In contrast, when driving support control unit 500 performs the lane change of vehicle 100 following the trajectory of the target lateral position or the target yaw angle relative to the lateral position of vehicle 100, irrespective of the disturbances due to, for example, transverse gradients of the road surface and side winds, which may obstruct the lateral movement of vehicle 100, it can be prevented that only the longitudinal position of vehicle 100 moves ahead while the lateral position of vehicle 100 remains unchanged.

However, when vehicle control system 200 uses the trajectory of the target lateral position or the target yaw angle relative to the lateral position of vehicle 100, the target lateral position or the target yaw angle cannot be changed in accordance with a change in the road curvature due to the forward movement of the longitudinal position of vehicle 100.

Accordingly, the trajectory of the target lateral position or the target yaw angle relative to the lateral position of vehicle 100 cannot correspond to the lane change in a curved road, and thus, a smooth shift to the lane keeping function cannot be made after the lane change.

Therefore, driving support control unit 500 uses, as the first target trajectory, in the first half of the lane change control for vehicle 100 before having started crossing the boundary, the trajectory of the target lateral position or the target yaw angle relative to the lateral position of vehicle 100, and in the second half of the lane change control for vehicle 100 while crossing or after having crossed the boundary, uses, as the second target trajectory, the trajectory of the target lateral position relative to the longitudinal position of vehicle 100.

As a result, vehicle 100 can be directed to the lane boundary irrespective of disturbances due to, for example, transverse gradients and side winds.

Also, after having crossed the lane boundary, vehicle 100 can be kept at a predetermined position in the width direction of the destination lane of the lane change while traveling, irrespective of a change in the road curvature, and thus, assistance for lane change and for lane keeping can be performed continuously.

Hereinafter, the lane change control performed by driving support control unit 500 will be described in detail.

FIG. 3 is a flow chart illustrating an aspect of the lane change control performed by driving support control unit 500.

Here, the lane change control as illustrated in FIG. 3 is assumed to be performed when driving support control unit 500 becomes incapable of detecting a lane marker when vehicle 100 crosses the lane boundary by changing lanes, and when there exists no preceding vehicle in the vicinity of vehicle 100, and exemplifies that the lane change can be completed even in such a situation.

FIG. 4 is a diagram schematically showing a generation of the target trajectory in a situation in which driving support control unit 500 becomes incapable of detecting the lane marker as vehicle 100 crosses the lane boundary for changing lanes.

Before vehicle 100 starts crossing the boundary, driving support control unit 500 directs vehicle 100 toward the boundary using the first target trajectory, which is a trajectory of the target lateral position or the target yaw angle relative to the lateral position of vehicle 100.

Although driving support control unit 500 then becomes incapable of detecting the lane marker when vehicle 100 crosses the boundary, based on the stored value of the lane marker recognition information, driving support control unit 500 detects, as a target trajectory for vehicle 100 having crossed the boundary, the second target trajectory, which is a trajectory of the target lateral position relative to the longitudinal position of vehicle 100. Thereby, driving support control unit 500 allows vehicle 100 to keep the traveling position at the predetermined position in the width direction of the destination lane of the lane change.

Here, the case in which driving support control unit 500 has become incapable of detecting the lane marker during the lane change control includes a case in which the detection accuracy of camera 310 is reduced during the lane change control, a case in which the lane marker demarcating the lane is partly missing, and a case in which paint of the lane marker demarcating the lane has faded.

Furthermore, the case in which the detection accuracy of camera 310 is reduced includes, for example, a case in which the lane marker is less detectable due to an effect of a viewing angle of camera 310 relative to the lane marker, and a case in which the lane marker is less detectable due to road shape (in detail, for example, curvatures and transverse gradients).

Also, when camera 310 has broken down and cannot capture images, vehicle control system 200 gives a warning to the driver of vehicle 100 by, for example, a screen display or sound, and encourages to stop the driving support function and switch to manual operation (i.e., manual steering).

Hereinafter, the procedure of the lane change control performed by driving support control unit 500 will be described referring to a flowchart of FIG. 3.

Driving support control unit 500 executes the process of the lane change control at every predetermined time (for example, every 50 ms) by a timer interrupt.

First, in step S801, driving support control unit 500 reads a result of lane detection to be used in the lane keeping control, specifically, measurement information on the physical quantities each related to the curvature of the lane, the yaw angle of vehicle 100 relative to the lane marker, or the lateral position of vehicle 100 relative to the lane marker.

Next, in step S802, driving support control unit 500 reads ON/OFF of turn signal switch 400 that servers as the operation switch for operating the lane change assist function.

Next, in step S803, driving support control unit 500 determines whether the lane change assist function has been completed, in other words, whether the lane change assist function is being performed.

Here, when the lane change assist function has been completed, in other words, when the lane change assist function is not being performed, driving support control unit 500 terminates the process, without proceeding to step S804 and subsequent steps.

On the other hand, when the lane change assist function has not been completed, in other words, when the lane change assist function is being performed, driving support control unit 500 proceeds from step S803 to step S804.

In step S804, driving support control unit 500 determines whether turn signal switch is in ON state, i.e., whether the driver of vehicle 100 is requesting to use the lane change assist function.

When turn signal switch 400 is in the OFF state and the driver of vehicle 100 is not requesting to use the lane change assist function, driving support control unit 500 terminates the process, without proceeding to step S805 and subsequent steps.

On the other hand, when turn signal switch 400 is in the ON state and the driver of vehicle 100 is requesting to use the lane change assist function, driving support control unit 500 proceeds to step S805 to perform a steering control as a lane change assist.

Here, the direction indicator, which is turned on by turn signal switch 400, is a device for indicating a direction of turn or lane change to the surroundings, when a left or right turn or a lane change is made. When, for example, a lane change to the adjacent right lane is intended, the driver of vehicle 100 operates blinker lever 410 to turn on a right side direction indicator.

Then, when the driver of vehicle 100 operates to turn on the right side direction indicator during the lane keeping control, driving support control unit 500 considers this as a command for changing lanes to the adjacent right lane, and starts the lane change control (in other words, the lane change assist).

In step S805, driving support control unit 500 determines whether it is before, during, or after vehicle 100 crosses, is crossing, or has crossed the lane boundary that divides the original lane before the lane change and the destination lane of the lane change (in other words, the adjacent lane of the original lane before the lane change).

As described later in detail, in the first half of the lane change control for vehicle 100 before having started crossing the lane boundary, driving support control unit 500 uses the first target trajectory, which is a trajectory of the target lateral position or the target yaw angle relative to the lateral position of vehicle 100, and in the second half of the lane change control for vehicle 100 while crossing or after having crossed the lane boundary, driving support control unit 500 uses the second target trajectory, which is a trajectory of the target lateral position relative to the longitudinal position of vehicle 100.

When vehicle 100 has not started crossing the lane boundary, driving support control unit 500 proceeds to step S806.

In step S806, referring to a map of the first target trajectory, which is a trajectory of the target lateral position of vehicle 100 relative to the lateral position of vehicle 100, driving support control unit 500 determines a physical quantity related to the target lateral position corresponding to the current lateral position of vehicle 100 and designates the determined physical quantity related to the target lateral position as the control parameter C.

Also, when determining the physical quantity related to the target lateral position corresponding to the lateral position of vehicle 100 in step S806, driving support control unit 500 sets a physical quantity related to a target curvature, which is designated as the parameter A, and a physical quantity related to a target yaw angle, which is designated as the parameter B, to zero.

Driving support control unit 500 then proceeds from step S806 to step S809 to output the parameters A, B, and C (i.e., the target curvature, the target yaw angle, and the target lateral position) to steering control unit 600 at a subsequent stage.

Here, the target lateral position in step S806 is a lateral position after a predetermined time (e.g., one second) elapsed from the current time, in other words, a target change amount of the lateral position [m] in a predetermined time.

Also, the lateral position of vehicle 100 is, for example, a distance [m] from a center of gravity of vehicle 100 to a center in the width direction of the destination lane of the lane change. Driving support control unit 500 determines the lateral position of vehicle 100 based on the lane marker recognition result.

FIG. 5 is a diagram illustrating an aspect of properties of the target change amount of the lateral position relative to the lateral position of vehicle 100 (in other words, the map of the first target trajectory).

Also, FIG. 6 is a diagram illustrating a trajectory of the target lateral position of vehicle 100 relative to the lateral position of vehicle 100 and an actual travel route of vehicle 100.

When it is immediately after the start of the lane change control and the distance from vehicle 100 to the destination lane of the lane change is long, driving support control unit 500 keeps the target change amount of the lateral position low, and as vehicle 100 approaches the destination lane of the lane chance, gradually increases the target change amount of the lateral position.

Then, when the target change amount of the lateral position is increased to a predetermined distance, driving support control unit 500 allows vehicle 100 to head to the destination lane of the lane change while maintaining a predetermined target change amount of the lateral position, until the distance to the destination lane of the lane change is decreased to a setting value.

Furthermore, when vehicle 100 has sufficiently approached the destination lane of the lane change, driving support control unit 500 gradually reduces the target change amount of the lateral position so that a smooth shift to a traveling which keeps vehicle 100 centered in the destination lane of the lane change can be made.

In the first half of the lane change control for vehicle 100 before having started crossing the lane boundary, driving support control unit 500 uses the first target trajectory, which is a trajectory of the target lateral position relative to the lateral position of vehicle 100.

As a result, driving support control unit 500 can steadily direct vehicle 100 to the lane boundary irrespective of disturbances due to, for example, transverse gradients and side winds, while causing the actual lateral position of vehicle 100 to follow the target trajectory.

Also, in step S806, driving support control unit 500 may set the target yaw angle in accordance with the lateral position of vehicle 100, instead of setting the target lateral position in accordance with the lateral position of vehicle 100.

Here, the target yaw angle in step S806 is a yaw angle after a predetermined time (e.g., one second) elapsed from the current time, in other words, a target change amount of the yaw angle [rad] in a predetermined time.

In this case, in step S806, referring to the map of the first target trajectory, which is a trajectory of the target change amount of the yaw angle of vehicle 100 relative to the lateral position of vehicle 100, driving support control unit 500 determines a physical quantity related to the target yaw angle corresponding to the current lateral position of vehicle 100 and designates the determined physical quantity related to the target yaw angle as the control parameter B.

As a result, the yaw angle, which is a vehicle attitude relative to the lane maker, can be changed in accordance with the lateral position of vehicle 100 relative to the lane marker, and the behavior of vehicle 100 at the time of changing lanes can be controlled more smoothly.

Here, when determining the physical quantity related to the target yaw angle corresponding to the lateral position of vehicle 100 in step S806, driving support control unit 500 sets the physical quantity related to the target curvature, which is designated as the control parameter A, and the physical quantity related to the target lateral position, which is designated as the control parameter C, to zero.

FIG. 7 is a diagram illustrating an aspect of properties of the target change amount of the yaw angle relative to the lateral position of vehicle 100 (in other words, the map of the first target trajectory).

When it is immediately after the start of the lane change control and the distance from vehicle 100 to the destination lane of the lane change is long, driving support control unit 500 provides the target change amount of the yaw angle to allow vehicle 100 to head to the destination lane of lane change.

By slightly increasing the yaw angle of vehicle 100 before vehicle 100 approaches the destination lane of the lane change, according to the target change amount of the yaw angle, vehicle 100 can cross the boundary more stably and a smooth shift to a traveling which keeps vehicle 100 centered in the destination lane of the lane change can be realized.

As a result, driving support control unit 500 can set an appropriate yaw angle corresponding to the lateral position of vehicle 100 and can steadily direct vehicle 100 to the lane boundary irrespective of disturbances due to, for example, transverse gradients and side winds.

Here, in step S806, driving support control unit 500 may set a target lateral position in accordance with the lateral position of vehicle 100, and may further set a target yaw angle in accordance with the lateral position of vehicle 100.

Here, driving support control unit 500 may change the physical quantity related to the target lateral position or the physical quantity related to the target yaw angle, as set in step S806, in accordance with the transverse gradient of the road.

Based, for example, on information on positioning by GPS, driving support control unit 500 obtains, from an altitude map that includes information on transverse gradients of the road, information on the transverse gradient of the road on which vehicle 100 is traveling.

When the transverse gradient of the road, on which vehicle 100 is traveling, is an upward gradient with respect to the lane change direction, driving support control unit 500 corrects a value of the physical quantity related to the target lateral position or the physical quantity related to the yaw angle to be increased, as the gradient increases.

As a result, driving support control unit 500 can set an appropriate target lateral position or target yaw angle with respect to the transverse gradient of the road and can perform a smoother lane change on a road with a transverse gradient, and thus, can realize a similar lane change as on a flat road, even on a road with a transverse gradient.

Also, driving support control unit 500 may change the physical quantity related to the target lateral position or the physical quantity related to the target yaw angle, as set in step S806, based on the curvature of the road.

When the direction of the lane change is the same as that of a curve of the road, for example, when the lane change is made from the left lane to the right lane among the two-lanes and when the road is curving to the right, driving support control unit 500 corrects the value of the physical quantity related to the target lateral position or the physical quantity related to the target yaw angle to be increased, as the curvature of the road increases.

As a result, driving support control unit 500 can set an appropriate target lateral position or target yaw angle with respect to the curvature of the road, and thus, can realize a similar lane change as on a straight road, even on a curved road.

Also, driving support control unit 500 may change the physical quantity related to the target lateral position or the physical quantity related to the target yaw angle, as set in step S806, based on the lateral acceleration of vehicle 100.

When, for example, the direction of the lateral acceleration of vehicle 100 is the same as the direction of the lane change, driving support control unit 500 corrects the value of the physical quantity related to the target lateral position or the physical quantity related to the target yaw angle to be decreased, as the lateral acceleration increases.

As a result, driving support control unit 500 can set an appropriate target lateral position or target yaw angle with respect to the lateral acceleration of vehicle 100 before the lane change, and thus, can realize a similar lane change as from a linear movement state, in which the lateral acceleration is low, even from a state in which the lateral acceleration is being generated.

Also, driving support control unit 500 may change the physical quantity related to the target lateral position or the physical quantity related to the target yaw angle, as set in step S806, based on the speed of vehicle 100.

Driving support control unit 500, for example, corrects the value of the physical quantity related to the target lateral position or the physical quantity related to the target yaw angle to be decreased, as the speed of vehicle 100 decreases.

As a result, driving support control unit 500 can set an appropriate target lateral position or target yaw angle even when a road, on which the lane change is to be performed, is having a slow traffic flow, and thus, can realize a similar lane change as in when the traffic is smoothly flowing, even when vehicle 100 is traveling at a lower speed due to, for example, a traffic jam.

Also, driving support control unit 500 may change the physical quantity related to the target lateral position or the physical quantity related to the target yaw angle, as set in step S806, based on the longitudinal acceleration of vehicle 100.

When, for example, the longitudinal acceleration of vehicle 100 indicates that vehicle 100 is in an accelerating state, driving support control unit 500 corrects the value of the physical quantity related to the target lateral position or the physical quantity related to the target yaw angle to be increased, as the acceleration increases.

As a result, driving support control unit 500 can set an appropriate target lateral position or target yaw angle with respect to the longitudinal acceleration of vehicle 100, and thus, can realize a similar lane change when accelerating and when not accelerating.

On the other hand, when it is determined that vehicle 100 is crossing the lane boundary, driving support control unit 500 proceeds to step S807.

Driving support control unit 500 generates a basic map of the second target trajectory, which is a trajectory of the target lateral position relative to the longitudinal position of vehicle 100.

In step S807, based on the yaw angle and the lateral position relative to the lane marker at which vehicle 100 has crossed the lane boundary, driving support control unit 500 generates, as the basic map of the second target trajectory, a virtual line along which vehicle 100 moves forward while maintaining the yaw angle relative to the lane marker at which vehicle 100 has crossed the lane boundary, and which merges to a line that is laterally offset by a predetermined distance from the lane boundary (in other words, a line that keeps a predetermined position in the width direction of the destination lane of the lane change) while the yaw angle being returned to zero.

Here, the above predetermined distance corresponds, for example, to half the length of the lane width obtained from the lane marker recognition result.

Assuming that the road is a straight road, when the predetermined distance is set to correspond to half the length of the lane width, the virtual line is a line that leads from a position at which vehicle 100 has crossed the lane boundary to the center in the width direction of the destination lane of the lane change, and is kept centered in the width direction of the destination lane of the lane change.

FIG. 8 is a diagram describing a generation of the virtual line in a case in which vehicle 100 changes lanes to the adjacent left lane.

In FIG. 8, $\theta$ indicates a yaw angle of vehicle 100 relative to the lane marker at which vehicle 100 has crossed the lane boundary.

A target point 1 is a point at which an axis, which passes through the center-of-gravity point of vehicle 100 in the width direction of vehicle 100 with a vehicle attitude at which vehicle 100 has crossed the lane boundary, intersects with a line, which passes through the center in the width direction of the destination lane of the lane change. When the lane width is W, target point 1 is leftwardly away by a distance L1 (L1 = (W/2) / cos $\theta$) from the position of vehicle 100 at which it has crossed the lane boundary.

A target point 2 is a position at which a line, along which vehicle 100 moves forward while maintaining the yaw angle $\theta$ from the position of vehicle 100 at which it has crossed the lane boundary, intersects with a line that passes through the center in the width direction of the destination lane of the lane change, and is ahead of the position of vehicle 100 at which it has crossed the lane boundary, by a distance D2 (D2 = (W/2) / sin $\theta$).

Assuming that the road on which vehicle 100 is traveling is a straight road, a straight line that connects target point 1 with target point 2 is a line that is kept centered in the width direction of the destination lane of the lane change.

Here, driving support control unit 500 sets target points 3, 4... at fixed distance intervals (e.g., intervals of 2.5m) between target point 2 and a point a predetermined distance ahead of target point 2 on the straight line that connects target point 1 with target point 2.

Driving support control unit 500 determines the predetermined distance for setting the target points by multiplying vehicle speed by a predetermined time (e.g., 3 seconds).

Driving support control unit 500 then sets a line that connects the position of vehicle 100 at which it has crossed the lane boundary with the target points 2, 3, 4..., as the virtual line.

Accordingly, assuming that the road on which vehicle 100 is traveling is a straight road, the virtual line serves as a traveling trajectory along which vehicle 100 having crossed the lane boundary reaches the center in the width direction of the destination lane of the lane change and travels while being kept centered in the width direction of the destination lane of the lane change.

Here, when the lane marker is being detected, driving support control unit 500 makes the virtual line correspond in shape to the curve based on the curvature detected when vehicle 100 has crossed the lane boundary.

Also, when the lane marker is not being detected, driving support control unit 500 makes the virtual line to correspond in shape to the curve based on the stored value of the latest detected (that is, detected immediately before the lane marker becomes not detected) curvature.

Here, when proceeding to step S809 after setting the virtual line in step S807, driving support control unit 500 maintains the values of the control parameters A, B, and C at previous values, i.e., the values last designated as parameters A, B, and C in step S806.

When it is determined in step S805 that vehicle 100 has started crossing the lane boundary, driving support control unit 500 proceeds to step S808.

In step S808, referring to the map of the second target trajectory, which is a trajectory of the target lateral position of vehicle 100 corresponding to the longitudinal position of vehicle 100, driving support control unit 500 determines the physical quantities related to the curvature, the yaw angle, and the lateral position, which are to be targeted, and designates the determined physical quantities related to the target curvature, the target yaw angle, and the target lateral position, as a control parameters A, B, and C.

Driving support control unit 500 then proceeds from step S808 to step S809 to output the parameters A, B, and C corresponding to the map of the second trajectory to steering control unit 600 at a subsequent stage.

Here, even when the lane marker is not being recognized, driving support control unit 500 sequentially corrects, based on the physical quantity related to the road curvature derived from map information, the map of the second target trajectory for vehicle 100 having crossed the boundary with the physical quantity related to the curvature, which was last detected while the lane marker was being detected, as a base.

FIG. 9 is a diagram for describing a process for correcting the map of the second target trajectory in accordance with the road curvature.

In FIG. 9, when target point 1 is away by a distance D1 from a base point and the road curvature is Cu, driving support control unit 500 corrects target point 1 toward the inside of the curve from a tangent line at the base point by a distance L1 (L1 = Cu $\times$ $D1^2$).

Similarly, driving support control unit 500 corrects target point 2, which is away by the distance D2 from the base point, toward the inside of the curve from the tangent line at the base point by a distance L2 (L2 = Cu $\times$ $D2^2$). Regarding also target point 3 and subsequent target points, driving support control unit 500 corrects their positions based on the distance from the base point and the road curvature Cu.

Driving support control unit 500 then updates the map of the second target trajectory to a line that connects the corrected target points 1, 2, 3...

As described above, while vehicle 100 is crossing or after vehicle 100 has crossed the lane boundary, driving support control unit 500 uses the second target trajectory, which is a trajectory of the target lateral position corresponding to the longitudinal position of vehicle 100, and changes the second target trajectory for vehicle 100 having crossed the boundary based on a change in the road curvature.

Driving support control unit 500 thus can allow vehicle 100 to travel while being kept centered in the destination lane of the lane change and a smooth shift from the lane change control to the lane keeping control can be realized.

Here, even when the lane marker has been recognized, driving support control unit 500 does not use the lane marker recognition result for the lane change during a predetermined period (e.g., for three seconds) after vehicle 100 has started crossing the lane boundary.

Lane marker detection accuracy may be lowered when vehicle 100 crosses the lane boundary, and thus, if driving support control unit 500 performs the lane change control based on the lane marker detected while vehicle 100 is crossing the lane boundary, an erroneous control is likely to be performed.

Driving support control unit 500 thus invalidates the lane marker detection result during a predetermined period after vehicle 100 has started crossing the lane boundary and thereby prevents a deterioration in the accuracy of the lane change control due to a deterioration in the detection accuracy.

Also, after vehicle 100 has crossed the lane boundary and has traveled while being kept centered in the width direction of the destination lane of the lane change for a predetermined time, once the lane marker becomes detectable and the lane keeping control becomes available, driving support control unit 500 outputs a control command for returning to the lane keeping control.

Here, even when the lane marker is detected before the predetermined time has elapsed, driving support control unit 500 outputs a control command for returning to the lane keeping control after the predetermined time has elapsed.

As a result, a shift to the lane keeping control can be made after vehicle 100 has become capable of traveling stably in the destination lane of the lane change according to the lane change control, and thus, driving support control unit 500 can continuously assist the steering control after the lane change.

Also, when the driver of vehicle 100 has made an input related to the steering during the lane change control, such as when the driver of vehicle 100 has performed an intervening steering operation by, for example, operating steering wheel 730, driving support control unit 500 prioritizes the input related steering received from the driver over the steering control command according to the lane change control.

This can prevent the lane change control from performing a steering against the driver's intention.

As described above, driving support control unit 500 can prevent the deterioration in the accuracy of the lane change control, even when the lane marker has become undetectable during the lane change control.

Moreover, by using the first target trajectory serving as the trajectory of the target lateral position (or the target yaw angle) relative to the lateral position of vehicle 100 before vehicle 100 starts crossing the boundary, driving support control unit 500 can direct vehicle 100 to the destination lane of the lane change while reducing the influence, for example, of the gradient of the road.

Also, by using the second target trajectory of the targe lateral position relative to the longitudinal position of vehicle 100 after vehicle 100 has crossed the boundary, driving support control unit 500 can allow vehicle 100 to travel while keeping a predetermined position in the width direction of the destination lane of the lane change and coping with the road curvature.

In addition, the lane change assist by vehicle control system 200 has a high control accuracy, and thus, can realize a vehicle technology which gives the driver a sense of security.

That is, in a case in which vehicle control system 200 becomes incapable of detecting the lane marker, and thereby vehicle 100 erroneously follows the preceding vehicle or travels out of the lane, the driver of vehicle 100 may feel insecure, and the reliability of the lane change control by the automatic steering is likely to be reduced.

In contrast, driving support control unit 500 can perform a lane change control almost normally, even when the lane marker has become undetectable during the lane change control.

Therefore, the driver of vehicle 100 can feel secure when vehicle 100 performs the lane change by the automatic steering, thereby enhancing the commercial value not only of vehicle control system 200 that performs the lane change assist, but also of vehicle 100.

FIG. 10 is a flowchart illustrating another aspect of the lane change control performed by driving support control unit 500.

The lane change control as illustrated in the flowchart of FIG. 10 is to be performed when driving support control unit 500 becomes incapable of detecting a lane marker before vehicle 100 starts crossing the lane boundary, and when there is no preceding vehicle in the vicinity of vehicle 100. This exemplifies that the lane change can be completed even in such a situation.

Here, driving support control unit 500 executes the processing shown in the flow chart of FIG. 10 at every predetermined time (for example, every 50 ms) by a timer interrupt.

Driving support control unit 500 executes the same processing in step S901 to step S904 as in step S801 to step S804, and accordingly, explanation of the processing in step S901 to step S904 is omitted.

When it is determined in step S904 that the driver of vehicle 100 has requested to use the lane change assist function, driving support control unit 500 proceeds to step S905.

In step S905, driving support control unit 500 determines whether or not the lane marker is being detected.

When the lane marker is being detected, driving support control unit 500 bypasses step S906 and proceeds to step S907, and when the lane marker is not being detected, proceeds to step S906.

In step S906, by the dead reckoning based on the stored values of the lateral position and the yaw angle of vehicle 100 relative to the lane marker detected immediately before the lane marker has become undetectable, driving support control unit 500 estimates the lateral position and the yaw angle of vehicle 100 at the present time, when the lane marker is not being detected.

Here, even after the lane marker has become undetectable, driving support control unit 500 keeps the information related to the curvature of the road, which was obtained based on the lane marker detection result just before the lane marker has become undetectable, stored in the memory.

In step S906, driving support control unit 500 calculates rotational and translational change amounts based, for example, on a vehicle speed V and a yaw rate $\gamma$ detected by sensor unit 300, and based on the calculated rotational and translational change amounts, updates the information on the lateral position and the yaw angle of vehicle 100 relative to the lane maker.

Here, driving support control unit 500 may obtain information on the yaw rate $\gamma$ based, for example, on the vehicle speed V and a steering angle $\theta$ detected by sensor unit 300, and furthermore, a wheelbase and a stability factor of vehicle 100.

When a calculation cycle of the rotational and translational change amounts is Ts [s]; a calculation cycle of the rotational change amount of vehicle 100 is $\Delta\theta$ [rad] ; a calculation cycle of a translational change amount of vehicle 100 in a vehicle length direction (in other words, longitudinal direction) is $\Delta X$ [m]; and a calculation cycle of a translational change amount of vehicle 100 in a vehicle width direction is $\Delta Y$ [m] $\Delta\theta$, $\Delta X$, and $\Delta Y$ are expressed by Formulas 1.

[Formulas 1]

$$\Delta\theta=\gamma\times Ts$$

$$\Delta X=V\times Ts\times\cos(\Delta\theta)$$

$$\Delta Y=V\times Ts\times\sin(\Delta\theta)$$

By updating, based on an integrated value of the rotational change amount of vehicle 100 $\Delta\theta$ and the translational change amount of vehicle 100 in the vehicle width direction $\Delta Y$, the information on the stored values of the lateral position and the yaw angle of vehicle 100 relative to the lane marker measured immediately before the lane marker becomes undetectable, driving support control unit 500 estimates the lateral position and the yaw angle of vehicle 100 at the present time, when the lane marker is not being detected.

Driving support control unit 500 can recognize, by the above-described dead reckoning, the lateral position and the yaw angle of vehicle 100 relative to the lane marker, even after the lane marker has become undetectable.

In step S907 to step S911, similarly as in step S805 to step S809, driving support control unit 500 determines whether it is before, during, or after vehicle 100 crosses, is crossing, or has crossed the lane boundary, and switches between the first target trajectory and the second target trajectory.

In step S908, in case in which driving support control unit 500 has become incapable of detecting the lane marker before vehicle 100 starts crossing the lane boundary, the target lateral position or the target yaw angle is determined based on the lateral position estimated by the dead reckoning.

Also, when it is determined based on the lateral position estimated by the dead reckoning that vehicle 100 is crossing the boundary, driving support control unit 500 proceeds to step S909 to set the virtual line of the second trajectory using the yaw angle estimated by the dead reckoning as the yaw angle relative to the lane marker at which vehicle 100 has crossed the lane boundary.

Therefore, even when the lane marker has become undetectable before vehicle 100 starts crossing the boundary, driving support control unit 500 can complete the lane change using the first target trajectory and the second target trajectory.

The technical concepts described in the above embodiments may be used in combination as necessary, as long as no conflict arises.

Furthermore, although the present invention has been described in detail with reference to the preferred embodiments, it is apparent that the embodiments may be modified in various forms by one skilled in the art based on the fundamental technical concepts and teachings of the present invention.

For example, the predetermined position in the width direction of the destination lane of the lane change is not limited to the center.

Moreover, driving support control unit 500 may consider a position shifted right or left from the center in the width direction of the destination lane of the lane change, according to conditions, such as a position of another vehicle traveling in the adjacent left or right lane of the destination lane of the lane change, and an entrance, middle, and an exit of the curved road, as a traveling target of the own vehicle.

Also, the period during the first half of the lane change control, in which the first target trajectory is used, is to be performed is not limited to a period before vehicle 100 starts crossing the boundary.

For example, driving support control unit 500 may perform a switch from the first target trajectory to the second target trajectory based on the distance from vehicle 100 to the predetermined position in the width direction of the destination lane of the lane change.

Furthermore, the input related to the activation of the lane change control is not limited to the driver's operation of blinker lever 410.

For example, vehicle control system 200 may be provided with an exclusive switch for the driver of vehicle 100 to command the activation of the lane change assist.

REFERENCE SYMBOL LIST

100 Vehicle

200 Vehicle control system

300 Sensor unit (detecting device)

400 Turn signal switch

500 Driving support control unit (vehicle control device)

510 Microcomputer (control unit, controller)

600 Steering control unit

700 Electric power steering device (steering device)

## Claims

1. A vehicle control device comprising a control unit that performs a calculation based on input information and outputs a calculation result,

   wherein the control unit
   obtains, when a vehicle traveling under a lane keeping control is to change lanes, a stored physical quantity related to a lateral position of the vehicle relative to a lane marker and a stored physical quantity related to a yaw angle of the vehicle relative to the lane marker,
   obtains, based on the physical quantity related to the lateral position and the physical quantity related to the yaw angle, a physical quantity related to a target trajectory to allow the vehicle to cross a boundary toward a destination lane of a lane change and to travel while keeping a predetermined position in a width direction of the destination lane of the lane change, and
   outputs, based on the physical quantity related to the target trajectory, a control command related to a steering to allow the vehicle to change lanes.

2. The vehicle control device according to claim 1,

   wherein the control unit
   determines, based on the physical quantity related the lateral position, a first target trajectory for the vehicle before having started crossing the boundary toward the destination lane of the lane change,
   determines, based on the physical quantity related to the lateral position and the physical quantity related to the yaw angle, a second target trajectory for the vehicle while crossing or after having crossed the boundary toward the destination lane of the lane change to travel while keeping a predetermined position in the width direction of the destination lane of the lane change, and
   obtains, based on the first target trajectory and the second target trajectory, the physical quantity related to the target trajectory.

3. The vehicle control device according to claim 2, wherein the control unit corrects, based on a physical quantity related to a curvature of the destination lane of the lane change, a part of the second target trajectory for the vehicle while crossing or after having crossed the boundary toward the destination lane of the lane change, the part of the second target trajectory being for the vehicle after having crossed the boundary.

4. The vehicle control device according to claim 1,

   wherein the control unit
   obtains, based on the target trajectory, a target lateral position or a target yaw angle of the vehicle, and
   outputs, based on the target lateral position or the target yaw angle of the vehicle, a control command related to a steering to allow the vehicle to change lanes.

5. The vehicle control device according to claim 4, wherein the control unit corrects, based on a transverse gradient of a road on which the vehicle is traveling, a curvature of the road, a lateral acceleration of the vehicle, a speed of the vehicle, or a longitudinal acceleration of the vehicle, the target lateral position or the target yaw angle.

6. The vehicle control device according to claim 1,

   wherein the control unit
   obtains, based on the target trajectory, a target lateral position and a target yaw angle of the vehicle, and
   outputs, based on the target lateral position and the target yaw angle of the vehicle, a control command related to a steering to allow the vehicle to change lanes.

7. The vehicle control device according to claim 6, wherein the control unit corrects, based on a transverse gradient of a road on which the vehicle is traveling, a curvature of the road, a lateral acceleration of the vehicle, a speed of the vehicle, or a longitudinal acceleration of the vehicle, the target lateral position and the target yaw angle.

**8.** The vehicle control device according to claim 1, wherein the physical quantity related to the lateral position and the physical quantity related to the yaw angle are physical quantities at the time after an input related to a start of the lane change is made to the control unit.

**9.** The vehicle control device according to claim 1, wherein the control unit outputs, after the vehicle has crossed the boundary toward the destination lane of the lane change and has traveled while keeping a predetermined position in the width direction of the destination lane of the lane change for a predetermined time, a control command for returning to the lane keeping control.

**10.** The vehicle control device according to claim 9, wherein the control unit outputs, even when the lane marker is detected when the vehicle having crossed the boundary toward the destination lane of the lane change is traveling while keeping a predetermined position in the width direction of the destination lane of the lane change, the control command for returning to the lane keeping control.

**11.** The vehicle control device according to claim 1, wherein when a driver of the vehicle has made an input related to the steering, the control unit prioritizes the input related to the steering from the driver of the vehicle over the control command related to the steering to allow the vehicle to change lanes.

**12.** The vehicle control device according to claim 1, wherein when the lane marker has become undetectable before the vehicle crosses the boundary, the control unit estimates, by a dead reckoning based on the lateral position and the yaw angle of the vehicle relative to the lane marker detected immediately before the lane marker has become undetectable, the lateral position and the yaw angle of the vehicle at a present time, when the lane marker is not being detected.

**13.** A vehicle control method comprising:

obtaining, when a vehicle traveling under a lane keeping control is to change lanes, a stored physical quantity related to a lateral position of the vehicle relative to a lane marker and a stored physical quantity related to a yaw angle of the vehicle relative to the lane marker,
obtaining, based on the physical quantity related to the lateral position and the physical quantity related to the yaw angle, a physical quantity related to a target trajectory to allow the vehicle to cross a boundary toward a destination lane of a lane change and to travel while keeping a predetermined position in a width direction of the destination lane of the lane change, and
outputting, based on the physical quantity related to the target trajectory, a control command related to a steering to allow the vehicle to change lanes.

**14.** A vehicle control system comprising:

a detecting device to detect a physical quantity related to a position of a lane marker relative to a position of a vehicle, the lane marker demarcating a lane on which the vehicle travels,
a controller that
obtains, when a vehicle traveling under a lane keeping control is to change lanes, a stored physical quantity related to a lateral position of the vehicle relative to the lane marker and a stored physical quantity related to a yaw angle of the vehicle relative to the lane marker,
obtains, based on the physical quantity related to the lateral position and the physical quantity related to the yaw angle, a physical quantity related to a target trajectory to allow the vehicle to cross a boundary toward a destination lane of a lane change and to travel while keeping a predetermined position in a width direction of the destination lane of the lane change, and
outputs, based on the physical quantity related to the target trajectory, a control command related to a steering to allow the vehicle to change lanes; and
a steering device of the
vehicle to obtain the control command output from the controller.

FIG.1

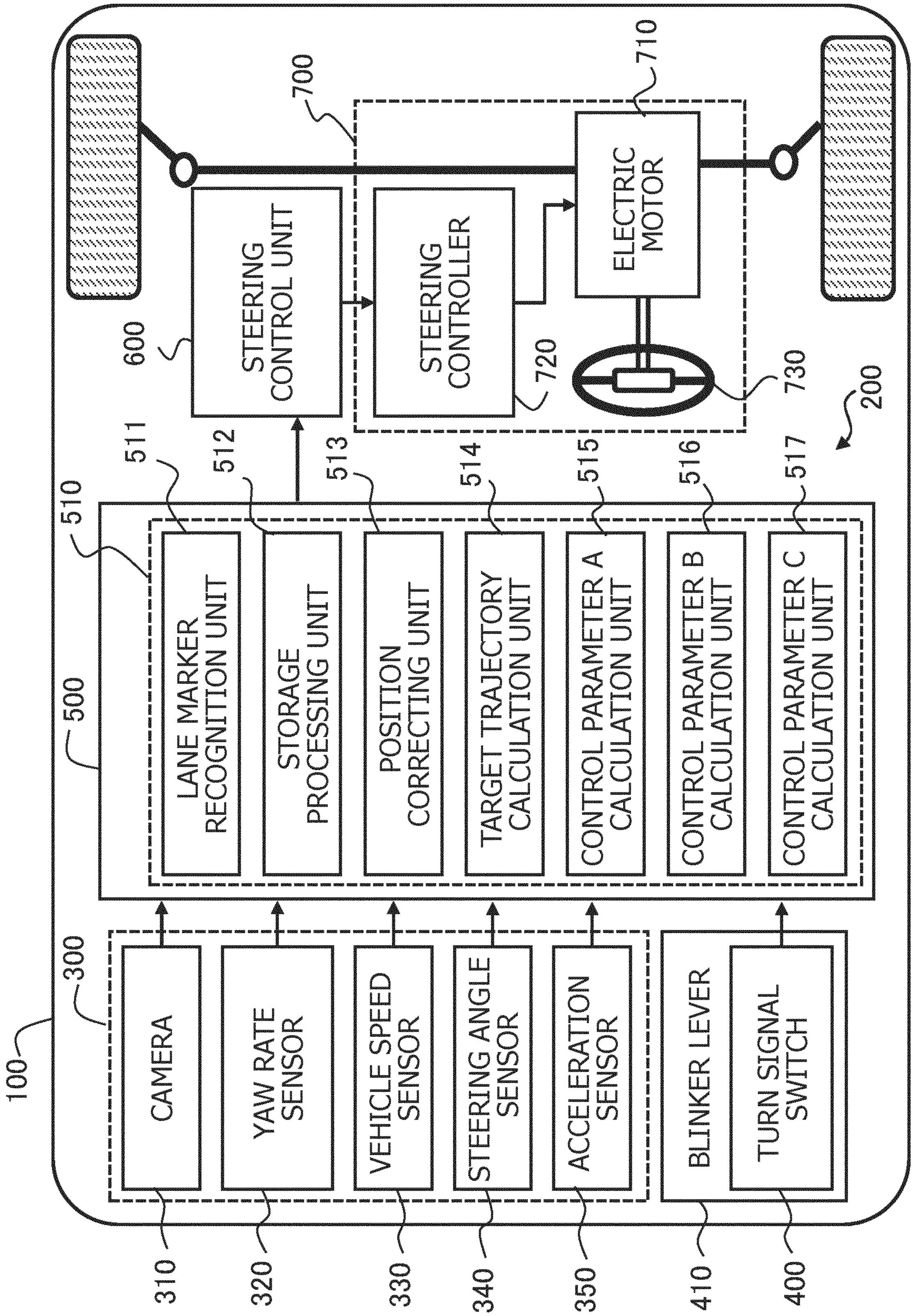
100
300
310
320
330
340
350
CAMERA
YAW RATE SENSOR
VEHICLE SPEED SENSOR
STEERING ANGLE SENSOR
ACCELERATION SENSOR
410
400
BLINKER LEVER
TURN SIGNAL SWITCH
500
510
511
512
513
514
515
516
517
LANE MARKER RECOGNITION UNIT
STORAGE PROCESSING UNIT
POSITION CORRECTING UNIT
TARGET TRAJECTORY CALCULATION UNIT
CONTROL PARAMETER A CALCULATION UNIT
CONTROL PARAMETER B CALCULATION UNIT
CONTROL PARAMETER C CALCULATION UNIT
600
STEERING CONTROL UNIT
700
710
720
730
STEERING CONTROLLER
ELECTRIC MOTOR
200

FIG.2

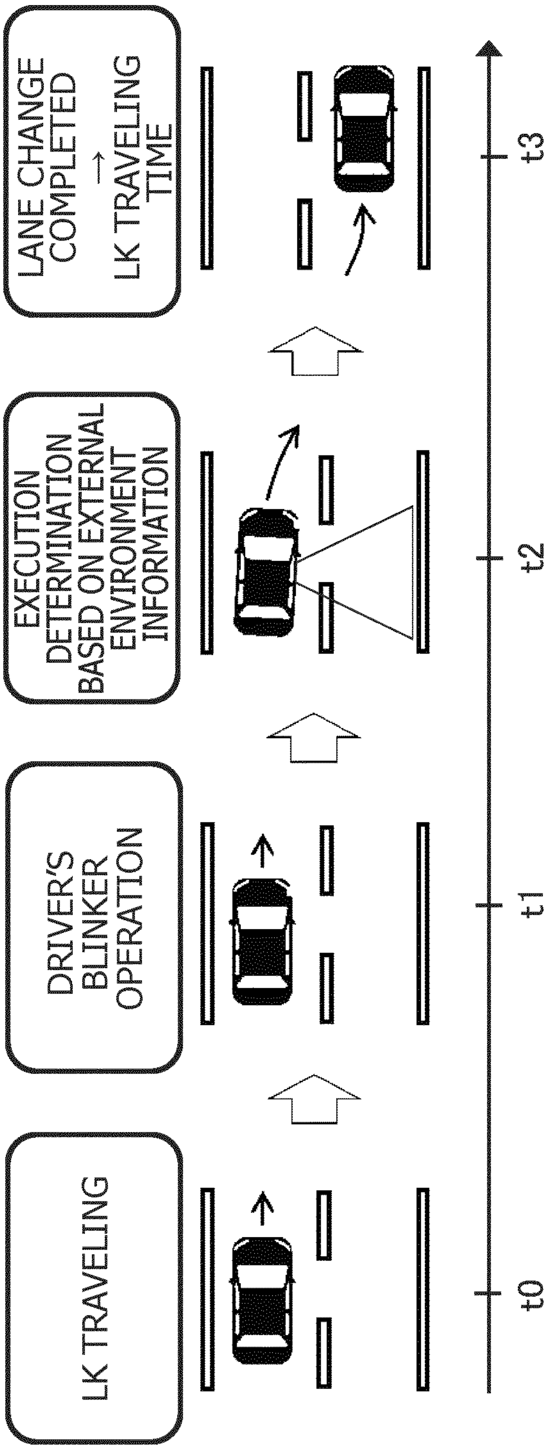
LK TRAVELING
DRIVER'S BLINKER OPERATION
EXECUTION DETERMINATION BASED ON EXTERNAL ENVIRONMENT INFORMATION
LANE CHANGE COMPLETED
→
LK TRAVELING TIME
t0
t1
t2
t3

FIG.3

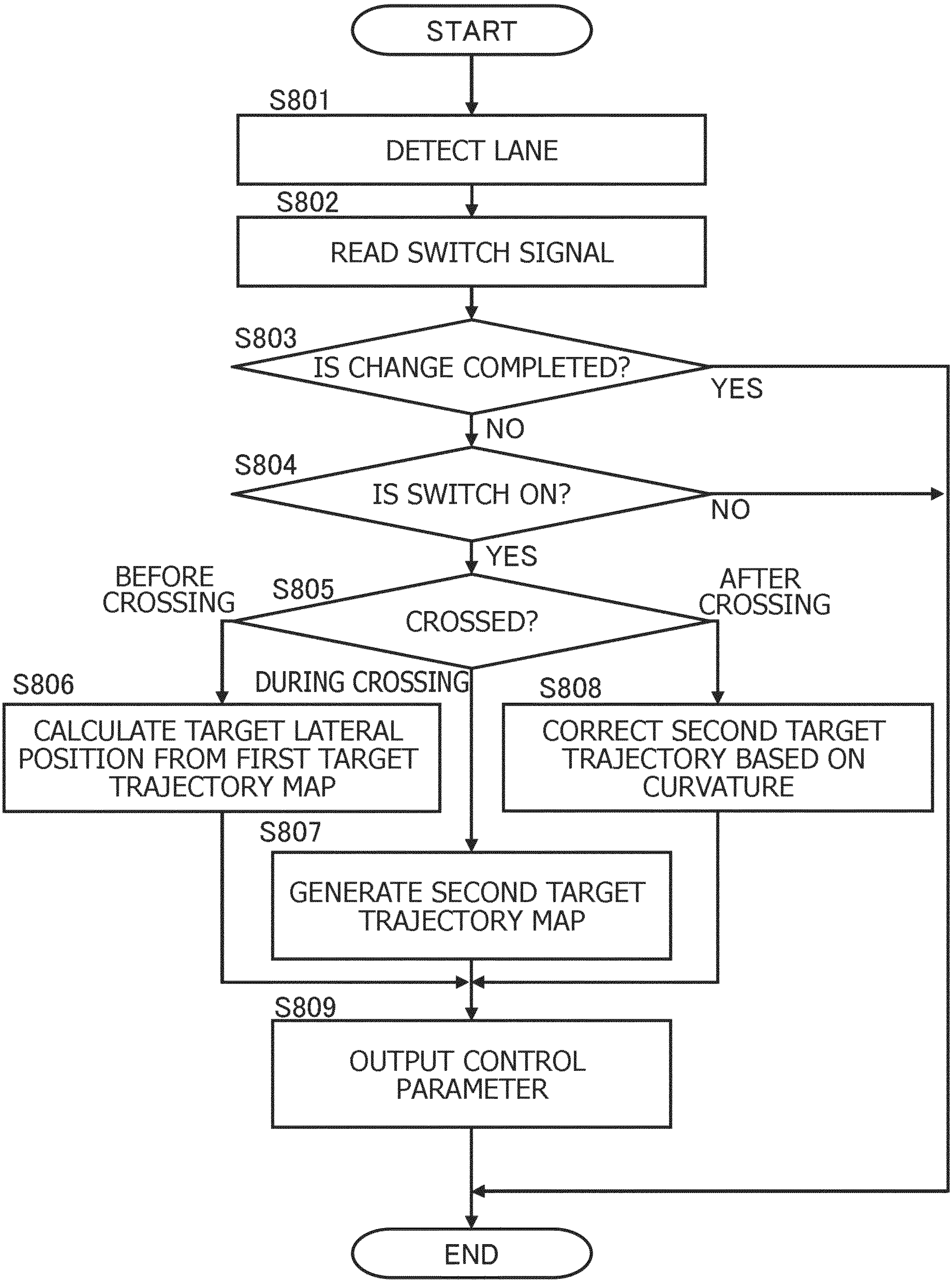
START
S801
DETECT LANE
S802
READ SWITCH SIGNAL
S803
IS CHANGE COMPLETED?
YES
NO
S804
IS SWITCH ON?
NO
YES
BEFORE CROSSING
S805
CROSSED?
AFTER CROSSING
S806
DURING CROSSING
S808
CALCULATE TARGET LATERAL POSITION FROM FIRST TARGET TRAJECTORY MAP
CORRECT SECOND TARGET TRAJECTORY BASED ON CURVATURE
S807
GENERATE SECOND TARGET TRAJECTORY MAP
S809
OUTPUT CONTROL PARAMETER
END

FIG.4

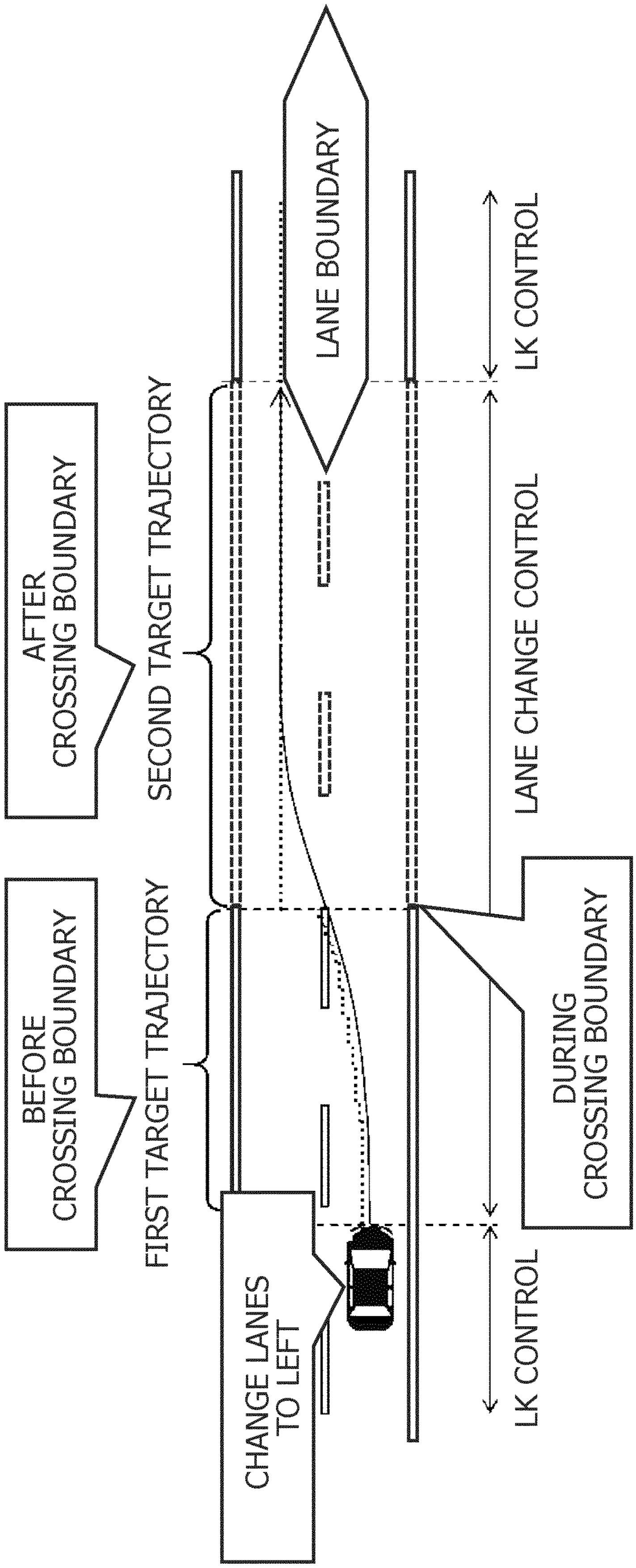
BEFORE CROSSING BOUNDARY
AFTER CROSSING BOUNDARY
FIRST TARGET TRAJECTORY
SECOND TARGET TRAJECTORY
CHANGE LANES TO LEFT
LANE BOUNDARY
DURING CROSSING BOUNDARY
LK CONTROL
LANE CHANGE CONTROL
LK CONTROL

FIG.5

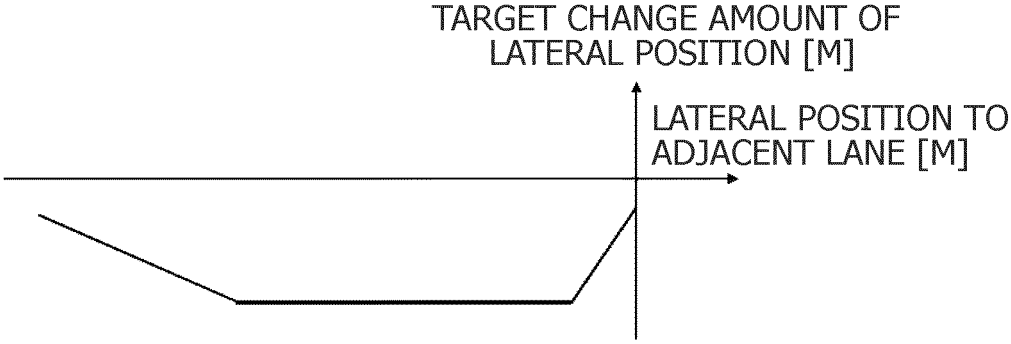
TARGET CHANGE AMOUNT OF
LATERAL POSITION [M]
LATERAL POSITION TO
ADJACENT LANE [M]

FIG.6

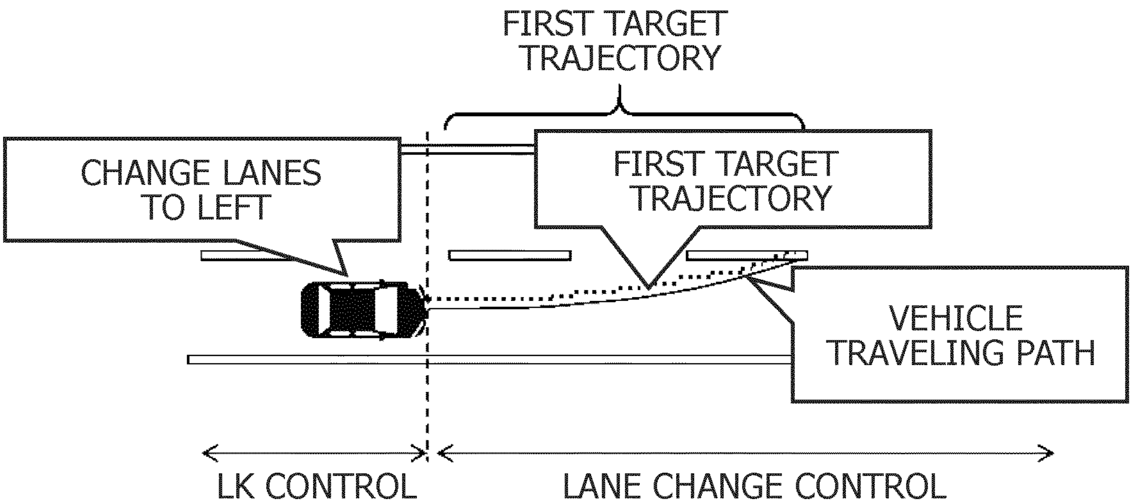
FIRST TARGET TRAJECTORY
CHANGE LANES TO LEFT
FIRST TARGET TRAJECTORY
VEHICLE TRAVELING PATH
LK CONTROL
LANE CHANGE CONTROL

FIG.7

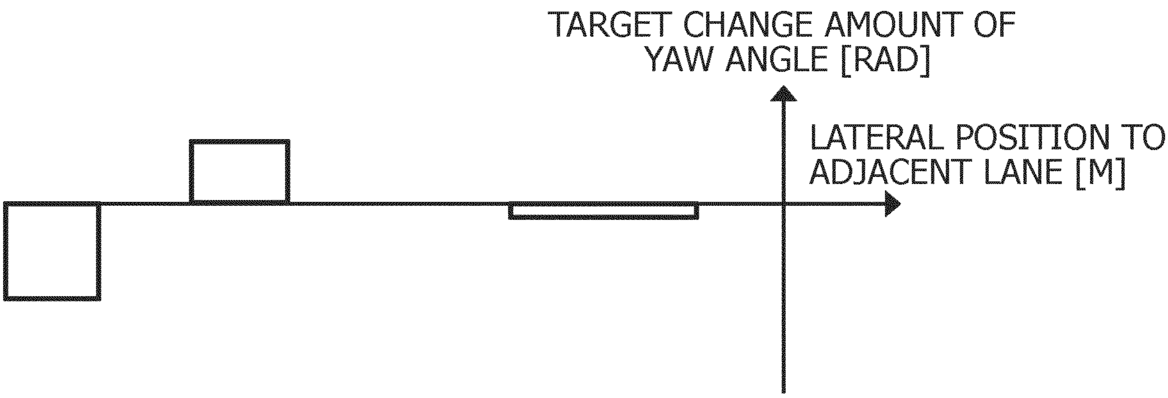
TARGET CHANGE AMOUNT OF
YAW ANGLE [RAD]
LATERAL POSITION TO
ADJACENT LANE [M]

FIG.8

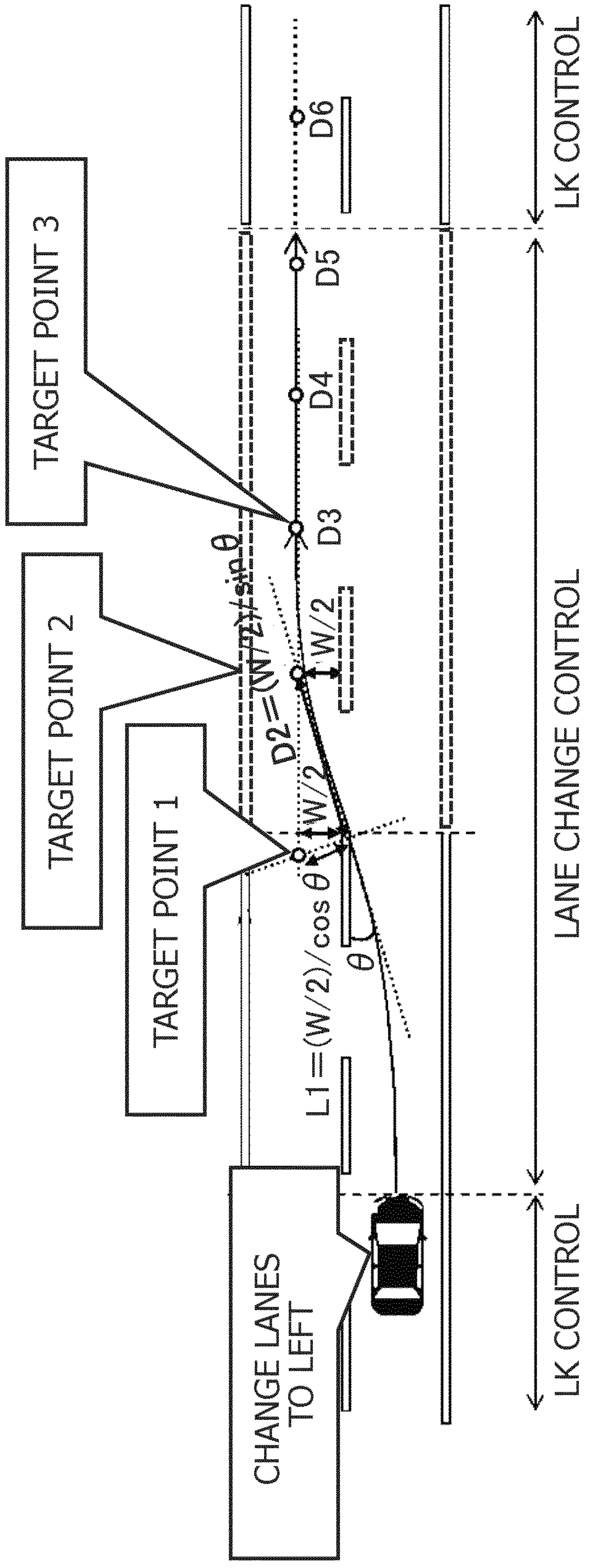

TARGET POINT 3
TARGET POINT 2
TARGET POINT 1
CHANGE LANES TO LEFT
D2=(W/2)/sin θ
L1=(W/2)/cos θ
W/2
W/2
W/2
θ
D3
D4
D5
D6
LK CONTROL
LANE CHANGE CONTROL
LK CONTROL

FIG.9

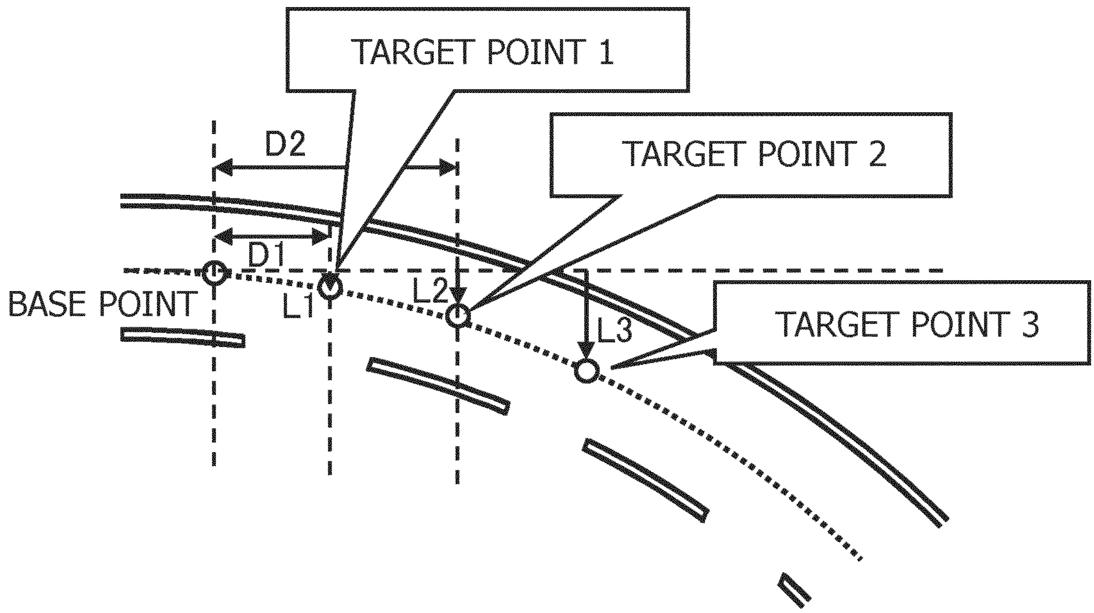
TARGET POINT 1
TARGET POINT 2
TARGET POINT 3
D2
D1
BASE POINT
L1
L2
L3

FIG.10

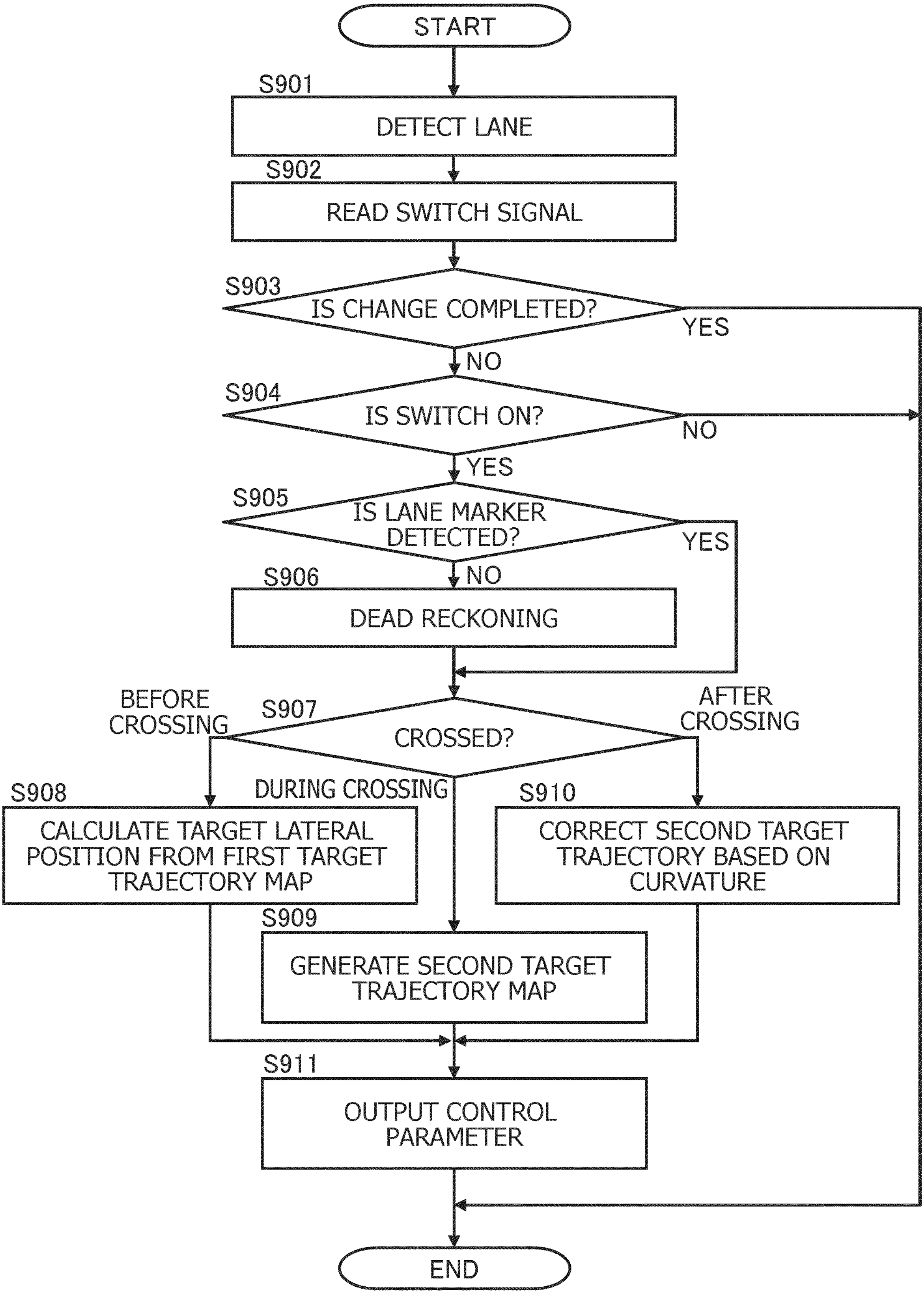
START
S901
DETECT LANE
S902
READ SWITCH SIGNAL
S903
IS CHANGE COMPLETED?
YES
NO
S904
IS SWITCH ON?
NO
YES
S905
IS LANE MARKER DETECTED?
YES
NO
S906
DEAD RECKONING
BEFORE CROSSING
S907
CROSSED?
AFTER CROSSING
DURING CROSSING
S908
CALCULATE TARGET LATERAL POSITION FROM FIRST TARGET TRAJECTORY MAP
S910
CORRECT SECOND TARGET TRAJECTORY BASED ON CURVATURE
S909
GENERATE SECOND TARGET TRAJECTORY MAP
S911
OUTPUT CONTROL PARAMETER
END

## INTERNATIONAL SEARCH REPORT

International application No.
**PCT/JP2021/027185**

**A. CLASSIFICATION OF SUBJECT MATTER**

***B60W 30/10***(2006.01)i; ***B60W 40/114***(2012.01)i; ***B62D 6/00***(2006.01)i; *B62D 101/00*(2006.01)n
FI: B60W30/10; B60W40/114; B62D6/00 ZYW; B62D101:00

According to International Patent Classification (IPC) or to both national classification and IPC

**B. FIELDS SEARCHED**

Minimum documentation searched (classification system followed by classification symbols)

B60W10/00-10/30; B60W30/00-60/00; B62D 6/00- 6/10; G08G 1/00-99/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-144577 A (TOYOTA MOTOR CORP.) 20 September 2018 (2018-09-20) paragraphs [0021]-[0081], fig. 1-2 | 1-3, 6-10, 13-14 |
| Y | paragraphs [0021]-[0081], fig. 1-2 | 11 |
| A | paragraphs [0021]-[0081], fig. 1-2 | 4-5, 12 |
| Y | JP 2019-156232 A (HONDA MOTOR CO., LTD.) 19 September 2019 (2019-09-19) paragraph [0015] | 11 |
| Y | JP 2019-59262 A (NISSAN MOTOR) 18 April 2019 (2019-04-18) paragraph [0026] | 11 |
| A | WO 2018/179616 A1 (MITSUBISHI ELECTRIC CORP.) 04 October 2018 (2018-10-04) paragraphs [0002]-[0005] | 12 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 September 2021** | **12 October 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**
**Information on patent family members**

International application No.
**PCT/JP2021/027185**

| Patent document cited in search report | Publication date (day/month/year) | Patent family member(s) | Publication date (day/month/year) |
|---|---|---|---|
| JP 2018-144577 A | 20 September 2018 | (Family: none) | |
| JP 2019-156232 A | 19 September 2019 | US 2019/0286127 A1<br>paragraph [0023]<br>CN 110271532 A | |
| JP 2019-59262 A | 18 April 2019 | (Family: none) | |
| WO 2018/179616 A1 | 04 October 2018 | US 2020/0240806 A1<br>paragraph [0015]<br>DE 112017007327 T5<br>CN 110431609 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019043378 A